# DEMANDE DE BREVET EUROPEEN

(11) **EP 1 426 676 A2**
(43) Date de publication de la demande: **09.06.2004**
(21) Numéro de dépôt: 03292977.0
(22) Date de dépôt: 28.11.2003
(51) Int. Cl.: F21V 11/16, F21S 8/10, B60Q 1/00

(54) **Procédé de réalisation d'une fonction optique sur un composant d'un dispositif d'éclairage ou de signalisation automobile**

(30) Priorité: 05.12.2002 FR 0215673
(71) Demandeur: VALEO VISION, 93012 Bobigny Cédex (FR)
(72) Inventeur: Lefevre, Ghislain, 77270 Villeparisis (FR); Giroud, Thomas, 84000 Avignon (FR)

(57) **Abrégé**

La présente invention concerne un procédé de réalisation d'une fonction optique sur un composant d'un dispositif d'éclairage ou de signalisation automobile. Ce procédé est plus particulièrement adapté à la réalisation de masque (13) pour projecteur ou feu et/ou au traitement de surfaces réfléchissantes. Le procédé comporte une étape de mise en forme dudit composant dans une matière prédéterminée et une étape d'exposition à un rayonnement laser d'au moins une surface dudit composant.

## Description

La présente invention concerne un procédé de réalisation d'une fonction optique sur un composant d'un dispositif d'éclairage ou de signalisation automobile. Ce procédé est plus particulièrement adapté à la réalisation de masque pour projecteur ou feu ou de réflecteur.

Très souvent, pour des raisons optiques et/ou esthétiques, le masque d'un projecteur automobile doit être métallisé. Ce masque peut recouvrir non seulement les feux de code, de route, la lampe ville mais également l'indicateur de direction. Un écran transparent de couleur ambre doit alors être placé devant l'indicateur de direction.

Une solution consiste à utiliser une pièce en matériau plastique de couleur ambre adaptée au masque ; cette pièce est fixée sur le masque.

Toutefois, l'ajout de cette pièce additionnelle entraîne un surcoût important dû non seulement au coût de la pièce elle-même mais égaiement à l'assemblage du masque et de la pièce.

La métallisation du masque entraîne en outre la réflexion de la lumière dans certaines zones provoquant ainsi des rayons lumineux parasites. On peut également retrouver des zones de réflexion parasite au niveau du réflecteur du projecteur qui est lui aussi métallisé pour exercer sa fonction optique de réflexion.

Une solution consiste à rendre mates les zones provoquant des rayons lumineux parasites par texturation (grainages, stries) du moule de fabrication du masque.

La mise en oeuvre d'une telle solution entraîne cependant certains problèmes.

En effet, l'utilisation d'un moule avec une texturation particulière rend peu flexible l'utilisation de ce moule à d'autres applications.

De plus, le moule peut facilement s'user ou être contaminé par des impuretés.

En outre, les zones de réflexion parasite ne se situent pas au même endroit du réflecteur selon que ce dernier est utilisé pour un véhicule roulant à droite ou à gauche. Deux moules différents sont donc nécessaires pour réaliser ces deux types de réflecteurs.

Enfin, dans le cas d'un réflecteur, le matériau utilisé est un matériau thermodurcissable, un métal injecté ou une tôle emboutie car le réflecteur est utilisé pour les feux de route qui chauffent à des températures élevées rendant impossible de ce fait l'utilisation d'un matériau thermoplastique ; pour ce type de matériau thermodurcissable, le grainage du moule est impossible car il entraîne des problèmes d'effritement au moment du démoulage.

La présente invention vise à fournir un procédé de réalisation d'une fonction optique sur un composant d'un dispositif d'éclairage ou de signalisation automobile permettant d'ajouter à bas coût et dans un espace restreint des fonctions optiques telles qu'un écran de couleur ambre pour indicateur de direction dans un projecteur et d'utiliser des moules sans texturation ou marquage particulier pour la réalisation de zone mat sur des pièces telles que les masques.

La présente invention propose à cet effet un procédé de réalisation d'une fonction optique sur un composant d'un dispositif d'éclairage ou de signalisation automobile comportant une étape de mise en forme dudit composant dans une matière prédéterminée.

Selon l'invention, ledit procédé comporte une étape d'exposition à un rayonnement laser d'au moins une surface dudit composant.

On part ainsi d'un composant mis en forme, par exemple par moulage, dans une matière telle qu'une matière plastique qui peut être métallisée ou non. La technologie laser permet ensuite de réaliser soit une ablation sélective sur ledit composant lorsque celui ci est métallisé soit une exposition directement sur la matière plastique.

L'ablation d'une surface métallique particulière n'affecte pas la matière plastique et laisse donc apparaître une zone de matière plastique. Cette zone correspond à une fonction optique telle qu'un écran.

L'exposition du laser directement sur la matière plastique permet par exemple de grainer une partie de la surface plastique, cette partie devenant moins réfléchissante après métallisation.

Un tel procédé permet donc de partir d'un composant sans marquage et offre une grande flexibilité d'utilisation pour réaliser des fonctions optiques particulières ou des zones de réflexion moins importante. Le procédé n'implique ni adaptation du masque ni pièce additionnelle.
Ce procédé permet également de créer des passages de lumière à travers une pièce tel qu'un masque en matière plastique transparent métallisé en créant, par ablation d'une surface métallique, une fenêtre de lumière par exemple pour une lampe ville.

Le procédé peut également comporter une étape de métallisation dudit composant.

Selon un premier mode de réalisation, le procédé comporte une étape de métallisation complète dudit composant préalable à ladite étape d'exposition à un rayonnement laser, ladite étape d'exposition étant une étape d'ablation sélective par rayonnement laser du métal de ladite surface dudit composant métallisé.

Selon un deuxième mode de réalisation, la matière prédéterminée est une matière plastique et ladite étape d'exposition à un rayonnement laser est une étape de grainage de ladite surface en matière plastique.

Avantageusement, ladite étape de grainage est suivie d'une étape de métallisation dudit composant.

Avantageusement, le rayonnement laser est réalisé au moyen d'un laser YAG, d'un laser CO₂ ou d'un laser excimère..

La présente invention a également pour objet un composant d'un dispositif d'éclairage ou de signalisation automobile obtenu par le procédé selon l'invention, ledit composant étant en une matière prédéterminée et comportant au moins une surface obtenue après exposition à un rayonnement laser.

La présente invention a en outre pour objet un composant d'un dispositif d'éclairage ou de signalisation obtenu par le procédé selon l'invention, ledit composant étant en matière plastique et comportant une surface métallisée et une surface non métallisée obtenue après ablation sélective du métal par rayonnement laser.

Selon un mode de réalisation, ladite matière plastique est transparente et de couleur ambre.

Ce mode de réalisation permet par exemple de réaliser un écran de couleur ambre pour clignotant sur un masque de projecteur.

Selon un autre mode de réalisation, ladite matière plastique est transparente est incolore.

Ce mode de réalisation permet par exemple de réaliser un passage de lumière, par exemple dans la partie lampe ville d'un masque de projecteur.

La présente invention a enfin pour objet un composant d'un dispositif d'éclairage obtenu par le procédé selon l'invention, ledit composant étant en matière plastique métallisée et comportant une surface réfléchissant la lumière et une surface ne réfléchissant pas la lumière.

Avantageusement, ledit composant comporte une pluralité de surfaces ne réfléchissant pas la lumière et une pluralité de surfaces réfléchissant la lumière.

Selon une première alternative, ladite matière plastique est une matière thermodurcissable.

Ainsi, on peut réaliser un réflecteur ayant des surfaces réfléchissant la lumière pour exercer leur fonction optique et des surfaces non réfléchissantes permettant de s'affranchir des réflexions parasites. La surface non réfléchissante est obtenue soit par grainage du matériau plastique puis métallisation soit par attaque d'une partie métallisée afin de modifier la texture du métal. On peut réaliser une pluralité de surfaces ne réfléchissant pas la lumière dans une même zone, la réflexion de la lumière étant d'autant plus faible que le nombre de surfaces est élevé. On peut en outre utiliser un seul moule de fabrication pour réaliser deux types de réflecteurs selon que le véhicule roule à gauche ou à droite, l'étape d'exposition sélective à un rayonnement laser permettant de différencier les réflecteurs.

Selon une seconde alternative, ladite matière plastique est une matière thermoplastique.

Cette seconde alternative permet par exemple de réaliser des masques pour projecteur métallisé pour des raisons esthétiques et de traiter les surfaces risquant de réfléchir les rayons parasites.

Selon un autre mode de réalisation, ladite matière prédéterminée est un métal tel que l'aluminium.

D'autres caractéristiques et avantages de la présente invention apparaîtront dans la description suivante de modes de réalisation de l'invention, donnés à titre illustratif et nullement limitatif.

Dans les figures suivantes :
- La figure 1 représente schématiquement un projecteur comportant un indicateur de direction obtenu par le procédé selon l'invention,
- La figure 2 représente schématiquement un projecteur comportant un passage de lumière obtenu par le procédé selon l'invention,
- La figure 3 représente schématiquement un projecteur comportant un masque ayant des zones non réfléchissantes obtenues par le procédé selon l'invention,
- La figure 4 représente schématiquement une coupe horizontale axiale d'un réflecteur croisement/route,
- La figure 5 représente schématiquement une vue de face du réflecteur de la figure 4 selon un premier mode de réalisation de l'invention,
- La figure 6 représente schématiquement une vue de face du réflecteur de la figure 4 selon un deuxième mode de réalisation de l'invention.

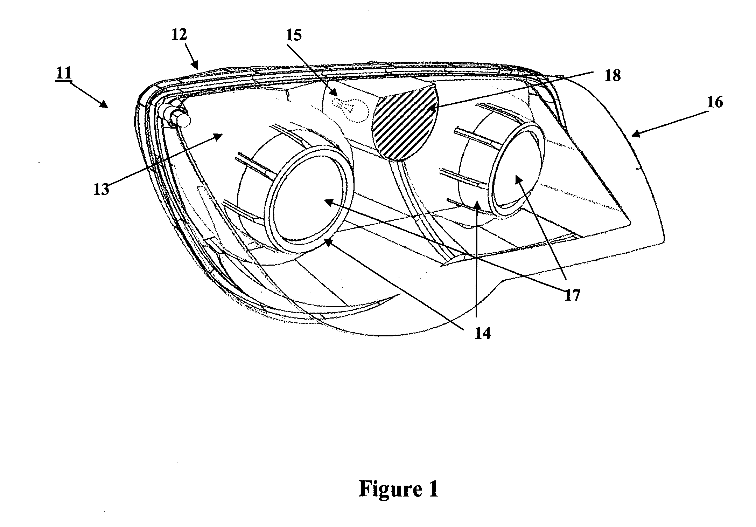

La figure 1 représente schématiquement un projecteur 11 de véhicule automobile comportant un écran transparent de couleur ambre pour indicateur de direction obtenu par le procédé selon l'invention.

Le projecteur 11 comporte notamment :
- un boîtier 12,
- une glace de protection 16,
- des lentilles de projecteurs elliptiques 17,
- un masque 13,
- une ampoule 15 pour indicateur de direction.

Les trois éléments, boîtier 12, glace de protection 16 et masque 13 sont réalisés en matière thermoplastique par injection.

Le masque 13 comporte deux orifices 14 pour les lentilles de projecteurs elliptiques 17.

Le masque 13 inclut une surface 18 transparente de couleur ambre située devant l'ampoule 15 et faisant office d'écran pour indicateur de direction. Cette surface 18 fait partie intégrante du masque 13.

Le masque 13 est obtenu par injection d'une matière thermoplastique tel que du polycarbonate transparent teinté en couleur ambre.

Le masque 13 est ensuite entièrement métallisé par une couche d'aluminium.

On utilise ensuite un laser du type YAG pour effectuer une ablation sélective de la couche d'aluminium du masque 13 correspondant à la surface 18 afin de laisser apparaître la matière plastique couleur ambre.

On peut prendre par exemple un laser YAG fonctionnant à une longueur d'onde de 1064 nm, une vitesse de déplacement de 900 mm/s, une puissance de 20 W et une fréquence de 4500 Hz. Un laser à CO₂ ou un laser de type excimère peuvent également être utilisés.

On obtient ainsi un masque 13 métallisé excepté sur la surface 18.

Ce procédé permet donc la réalisation d'une fonction d'écran de couleur ambre 18 pour clignotant sans ajouter de pièce supplémentaire dans le projecteur 11 en utilisant uniquement la matière du masque 13.

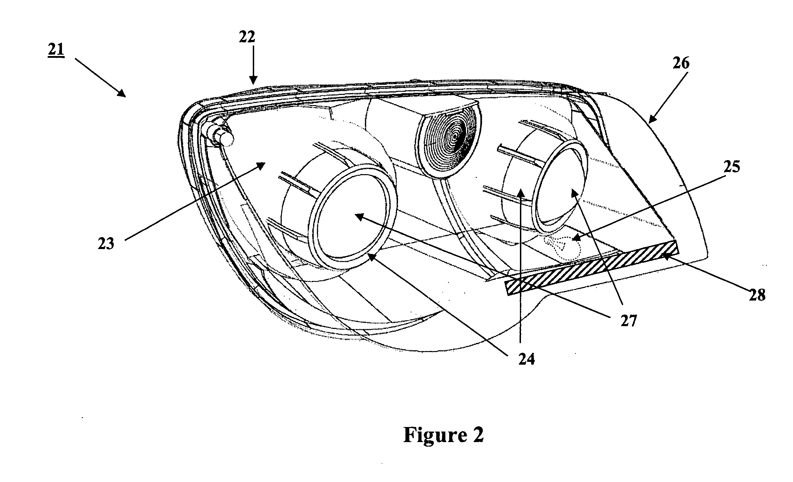

La figure 2 représente schématiquement un projecteur 21 comportant un passage de lumière obtenu par le procédé selon l'invention.

Le projecteur 21 comporte notamment :
- un boîtier 22,
- une glace de protection 26,
- des lentilles de projecteurs elliptiques 27,
- un masque 23,
- une ampoule 25 pour lampe ville.

Les trois éléments, boîtier 22, glace de protection 26 et masque 23 sont réalisés en matière thermoplastique par injection.

Le masque 23 comporte deux orifices 24 pour les lentilles de projecteurs elliptiques 27.

Le masque 23 inclut une surface 28 transparente et incolore située devant l'ampoule 25 pour lampe ville. Cette surface 28 fait partie intégrante du masque 23.

Le masque 23 est obtenu par injection d'une matière thermoplastique tel que du polycarbonate transparent et incolore.

Le masque 23 est ensuite entièrement métallisé par une couche d'aluminium.

On utilise ensuite un laser du type YAG pour effectuer une ablation sélective de la couche d'aluminium du masque 23 correspondant à la surface 28 afin de laisser apparaître la matière plastique transparente et incolore. Un laser à CO₂ ou un laser de type excimère peuvent également être utilisés.

On obtient ainsi un masque 23 métallisé excepté sur la surface 28.

Ce procédé permet donc la réalisation d'une fonction optique de passage de lumière pour lampe ville sans ajouter de pièce supplémentaire dans le projecteur 21 en utilisant uniquement la matière du masque 23.

La surface 28 peut avoir différentes formes telles qu'une bande ou un anneau permettant ainsi de reconnaître une certaine catégorie de véhicule grâce à la forme de la surface éclairée par les lampes villes.

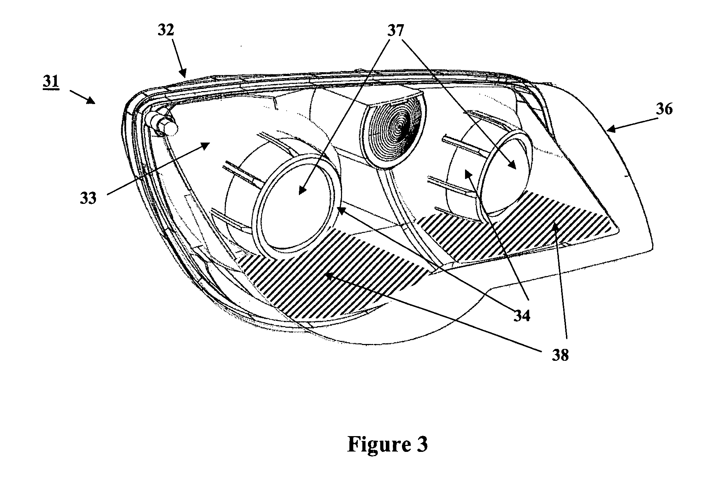

La figure 3 représente schématiquement un projecteur 31 comportant un masque ayant des zones non réfléchissantes obtenues par le procédé selon l'invention.

Le projecteur 31 comporte notamment :
- un boîtier 32,
- une glace de protection 36,
- des lentilles de projecteurs elliptiques 37,
- un masque 33.

Les trois éléments, boîtier 32, glace de protection 36 et masque 33 sont réalisés en matière thermoplastique par injection.

Le masque 33 comporte deux orifices 34 pour les lentilles de projecteurs elliptiques 37.

Le masque 33 inclut deux surfaces 38 ne réfléchissant pas la lumière.

Le masque 33 est obtenu par injection d'une matière thermoplastique.

Les zones thermoplastiques correspondant aux surfaces 38 sont d'abord grainées ou texturées par exposition à un rayonnement laser du type YAG. Un laser à CO₂ ou un laser de type excimère peuvent également être utilisés.

Le masque 33 est ensuite entièrement métallisé par une couche d'aluminium.

On obtient ainsi un masque 33 entièrement métallisé comportant deux surfaces 38 grainées et métallisées sur lesquelles la lumière ne se réfléchit pas ; on évite ainsi la présence de rayons lumineux parasites.

Ce procédé permet donc la réalisation d'une fonction optique de suppression des réflexions parasites sur un masque métallisé sans traitement particulier du moule utilisé pour injecter le masque.

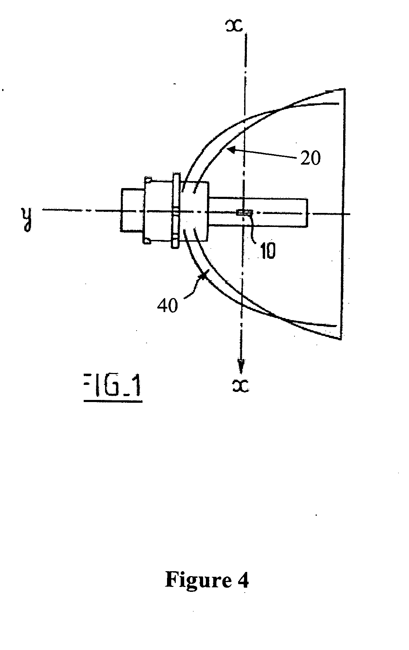

La figure 4 représente schématiquement une coupe horizontale axiale d'un réflecteur croisement/route 40.

Une source lumineuse 10, constituée par exemple par l'arc d'une lampe à décharge gazeuse, est montée dans le réflecteur 40.

Le réflecteur 40 comporte une face intérieure sensiblement elliptique 20 qui est métallisée de façon à réfléchir les rayons lumineux émis par la source 10.

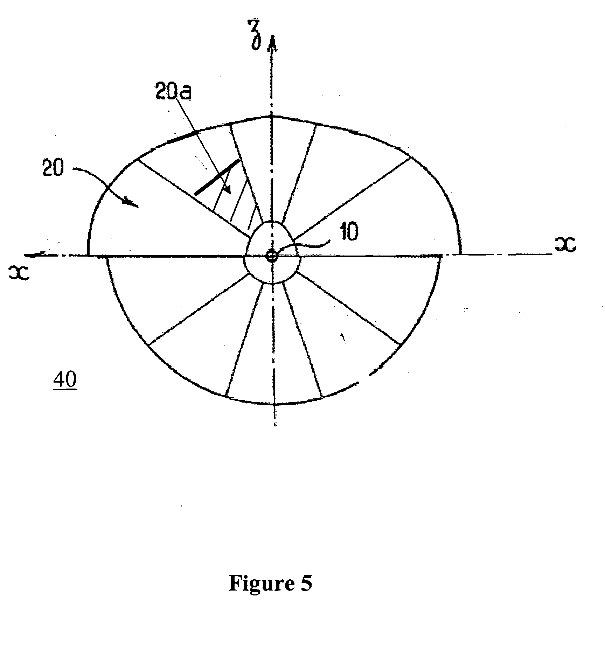

La figure 5 représente schématiquement une vue de face du réflecteur 40 de la figure 4 selon un premier mode de réalisation de l'invention.

La face intérieure métallisée 20 comporte une zone non métallisée 20a qui ne réfléchit pas la lumière. Notons que cette zone 20a peut également comporter une pluralité de motifs ne réfléchissant pas la lumière ; dans ce dernier cas, la zone 20a est partiellement réfléchissante, la réflexion étant modulable en fonction du nombre de motifs.

Le réflecteur 40 est obtenu par injection d'une matière plastique thermodurcissable.

La face 20 du réflecteur 40 est ensuite entièrement métallisé par une couche d'aluminium.

On utilise ensuite un laser du type YAG pour effectuer une ablation sélective de la couche d'aluminium de la face 20 correspondant à la zone 20a afin de laisser apparaître la matière plastique. Un laser à CO₂ ou un laser de type excimère peuvent également être utilisés.

On obtient ainsi une face 20 métallisé à l'exception de la surface 20a.

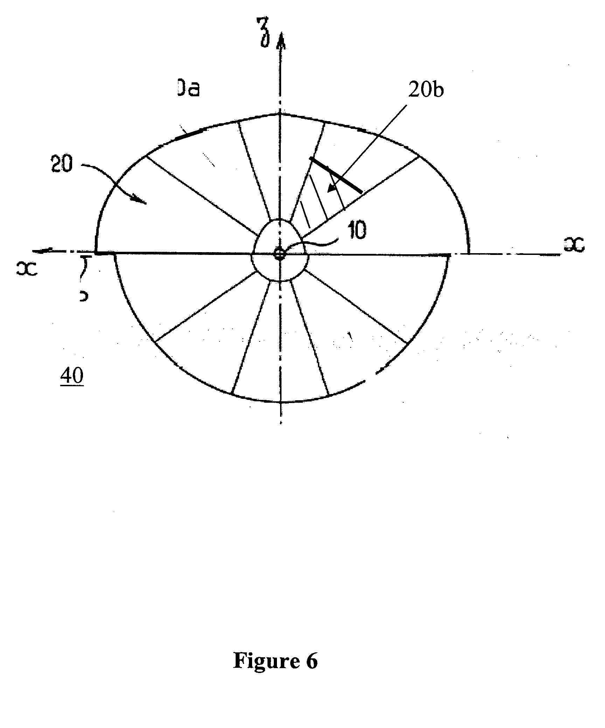

La figure 6 représente représente schématiquement une vue de face du réflecteur 40 de la figure 4 selon un deuxième mode de réalisation de l'invention.

Le réflecteur 40 tel que représenté en figure 6 est identique à celui représenté en figure 5 à la différence qu'il ne comporte pas la zone non réfléchissante 20a mais qu'il comporte une zone non réfléchissante 20b symétrique de la zone 20a par rapport à l'axe z.

Le procédé d'obtention d'un tel réflecteur est identique au procédé d'obtention tel que décrit en référence à la figure 5. Le procédé selon l'invention permet d'utiliser le même masque pour réaliser les deux réflecteurs tels que décrit respectivement en référence avec les figures 5 et 6. Ainsi, le même maque peut être utilisé pour réaliser des réflecteurs utilisés dans des véhicules roulant à gauche et à droite. L'étape d'ablation laser sélective permet ainsi de différencier les réflecteurs en intégrant une ou plusieurs zones non réfléchissantes.

Bien entendu, l'invention n'est pas limitée aux modes de réalisation qui viennent d'être décrits.

Notamment, les matériaux décrits soumis à un rayonnement laser étaient le plastique et l'aluminium mais il peut s'agir d'autres matériaux tels que d'autres métaux.

De plus, l'invention a été décrite uniquement dans le cas d'une mise en forme par injection mais il peut également s'agir d'une mise en forme par emboutissage, notamment lorsqu'on utilise une matière telle que la tôle.

De même, la description portait sur une injection de matière plastique mais il peut également s'agir d'une injection d'une matière telle que l'aluminium, le rayonnement laser agissant directement sur une surface de la pièce en aluminium.

En outre, l'invention a été décrite uniquement dans le cas d'un projecteur mais elle peut également s'appliquer à d'autres dispositifs utilisés pour l'éclairage ou la signalisation automobile tels que les éléments du feu arrière.

## Revendications

1. Procédé de réalisation d'une fonction optique sur un composant d'un dispositif d'éclairage ou de signalisation automobile comportant une étape de mise en forme dudit composant dans une matière prédéterminée,
**caractérisé en ce que** ledit procédé comporte une étape d'exposition à un rayonnement laser d'au moins une surface dudit composant.

2. Procédé selon la revendication 1 **caractérisé en ce qu'**il comporte une étape de métallisation dudit composant.

3. Procédé selon la revendication 1 **caractérisé en ce que** ladite matière prédéterminée est une matière plastique et **en ce que** ladite étape d'exposition à un rayonnement laser est une étape de grainage de ladite surface en matière plastique.

4. Procédé selon la revendication 3 **caractérisé en ce que** ladite étape de grainage est suivie d'une étape de métallisation de ladite pièce.

5. Procédé selon la revendication 1 **caractérisé en ce qu'**il comporte une étape de métallisation complète dudit composant préalable à ladite étape d'exposition à un rayonnement laser, ladite étape d'exposition étant une étape d'ablation sélective par rayonnement laser du métal de ladite surface dudit composant métallisé.

6. Procédé selon l'une des revendications précédentes **caractérisé en ce** le rayonnement laser est réalisé au moyen d'un laser YAG, d'un laser CO₂ ou d'un laser excimère.

7. Composant d'un dispositif d'éclairage ou de signalisation automobile obtenu par le procédé selon l'une des revendications 1 à 6, ledit composant étant en une matière prédéterminée et comportant au moins une surface obtenue après exposition à un rayonnement laser.

8. Composant d'un dispositif d'éclairage ou de signalisation automobile obtenu par le procédé selon l'une des revendications 5 à 6, ledit composant étant en matière plastique et comportant une surface métallisée et une surface non métallisée obtenue après ablation sélective du métal par rayonnement laser.

9. Composant selon la revendication 8 **caractérisé en ce que** ladite matière plastique est transparente et de couleur ambre.

10. Composant selon la revendication 8 **caractérisé en ce que** ladite matière plastique est transparente est incolore.

11. Composant d'un dispositif d'éclairage automobile obtenu par le procédé selon l'une des revendications 2 à 6, ledit composant étant en matière plastique métallisé et comportant une surface réfléchissant la lumière et une surface ne réfléchissant pas la lumière.

12. Composant selon la revendication précédente comportant une pluralité de surfaces ne réfléchissant pas la lumière et une pluralité de surfaces réfléchissant la lumière.

13. Composant selon l'une des revendications 8 à 12 **caractérisé en ce que** ladite matière plastique est une matière thermoplastique.

14. Composant selon l'une des revendications 8 à 12 **caractérisé en ce que** ladite matière plastique est une matière thermodurcissable.

15. Composant selon la revendication 7 **caractérisé en ce que** ladite matière prédéterminée est un métal.

16. Composant selon la revendication 15 **caractérisé en ce que** ledit métal est l'aluminium.
